Europäisches Patentamt

European Patent Office

Office européen des brevets

(19)

(11) Veröffentlichungsnummer : **0 036 569**
**B1**

(12) **EUROPÄISCHE PATENTSCHRIFT**

(45) Veröffentlichungstag der Patentschrift :
**13.10.82**

(21) Anmeldenummer : **81101809.2**

(22) Anmeldetag : **12.03.81**

(51) Int. Cl.³ : **B 01 D 53/26**, B 60 T 17/00,
F 04 B 39/16

(54) Lufttrockner für eine Druckluftanlage.

(30) Priorität : **26.03.80 DE 3011725**

(43) Veröffentlichungstag der Anmeldung :
**30.09.81 (Patentblatt 81/39)**

(45) Bekanntmachung des Hinweises auf die Patenterteilung : **13.10.82 Patentblatt 82/41**

(84) Benannte Vertragsstaaten :
**DE FR IT NL SE**

(56) Entgegenhaltungen :
**DE A 1 505 541**
**DE A 1 947 550**
**DE A 2 233 210**
**FR A 881 809**
**GB A 1 136 052**
**US A 3 796 025**

(73) Patentinhaber : **Knorr-Bremse GmbH**
**Moosacher Strasse 80**
**D-8000 München 40 (DE)**

(72) Erfinder : **Ruess, Leopold**
**Salbeistrasse 10**
**D-8000 München 45 (DE)**
Erfinder : **Unger, Hans**
**St. Benediktstrasse 7**
**D-8044 Unterschleissheim (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

EP 0 036 569 B1

# Lufttrockner für eine Druckluftanlage

Die Erfindung bezieht sich auf einen Lufttrockner für von einem Kompressor aufladbare, einen Luftvorratsbehälter aufweisende Druckluftanlagen, insbesondere Druckluftbremsanlagen von Fahrzeugen, mit einem einen mit dem Kompressor zu verbindenden Eingangsanschluß und einem mit dem Luftvorratsbehälter zu verbindenden Ausgangsanschluß aufweisenden Gehäuse, in welchem in Serie von der zu trocknenden Druckluft durchströmbar ein Luftfilter, diesem nachgeschaltet eine mit regenerierbarem Trocknungsmittel gefüllte Trocknungspatrone, ein dem Ausgangsanschluß vorgeschaltetes, in Strömungsrichtung zu diesem öffnendes, von einer Düse überbrücktes Rückschlagventil, eine von einem Druckwächter steuerbare, als Entwässersrungsvorrichtung und Entlastungsvorrichtung für den Kompressor dienende, ein kolbengesteuertes Auslaßventil aufweisende Auslaßvorrichtung und ein unmittelbar an den Eingangsanschluß, an das Luftfilter und an das Auslaßventil angrenzender Eingangsraum sowie in Serie zur das Rückschlagventil überbrückenden Düse ein sich in Abhängigkeit vom Einsteuervorgang einer Arbeitsstellung öffnendes Absperrventil vorgesehen sind, wobei der Druckwächter vom Druck im Luftvorratsbehälter schaltbar ist und bei Erreichen eines oberen Grenzdruckes die Auslaßvorrichtung in die die Druckluftförderung des Kompressors unterbrechende und ein Ausblasen von Kondensat bewirkende Arbeitsstellung, bei Unterschreiten eines unteren Grenzdruckes in eine die Druckluftförderung des Kompressors freigebende und das Ausblasen von Kondensat unterbrechende Ruhestellung schaltet, wobei während der Arbeitsstellung Druckluft aus dem Luftvorratsbehälter durch die Düse, das sich hierbei regenerierende Trocknungsmittel und durch die Auslaßvorrichtung zur Atmosphäre abströmt.

Ein derartiger Lufttrockner ist aus der GB-A- 1 136 052 bekannt. Der gesondert vom Lufttrockner ausgebildete Druckwächter schaltet über pneumatische oder elektrische Steuerleitungen am Kompressor angeordnete Entlastungsventile bzw. — bei elektrischem Kompressorantrieb — die Stromversorgung des Kompressorantriebes und steuert zugleich über diese Steuerleitungen oder vermittels einer mechanischen Verbindung die Schaltstellung der Auslaßvorrichtung. Der Druckregler ist hierbei also nicht in den Lufttrockner integriert, er muß als gesondertes Bauteil in der Druckluftanlage angeordnet werden und steigert hierdurch sowie durch die zu seinem Anschluß erforderlichen Steuerleitungen bzw. mechanischen Verbindungen den Herstellungs- und Wartungsaufwand für die Drucklftanlage.

Aus der GB-A- 1 136 052 ist weiterhin bekannt, die das Rückschlagventil überbrückende Düse einstellbar auszuführen, um den während der Regenerationsphase für das Trocknungsmittel aus dem Luftvorratsbehälter durch das Trocknungsmittel und das Luftfilter zur Atmosphäre strömenden Luftstrom an die jeweilige Druckluftanlage, insbesondere an das Volumen des Luftvorratsbehälters anpassen zu können. Die Düse muß hierbei derart justiert werden, daß bei durchschnittlichem Druckluftverbrauch aus der Druckluftanlage während der Abschalt- bzw. Leerlaufphase des Kompressors eine zur Regeneration des Trocknungsmittels ausreichende Druckluftmenge das Trocknungsmittel durchströmt, um bei Beginn der nachfolgenden Förderphase des Kompressors eine im Durchschnitt ausreichende Trocknungswirkung des Lufttrockners sicherzustellen. Aus dieser Funktionsweise ergibt sich, daß bei hohem Luftverbrauch aus der Druckluftanlage während der dann außergewöhnlich kurzen Kompressor-Leerlaufphase eine nur ungenügende Druckluftmenge das Trocknungsmittel durchströmt, dieses also nur ungenügend regeneriert wird, andererseits aber während der Förderphase des Kompressors von einer außergewöhnlich großen, zu trocknenden Druckluftmenge durchströmt wird. Es ergibt sich hierbei also eine nur ungenügende Trocknungswirkung für die Druckluft. Weiterhin ergibt sich aus der Funktionsweise, daß bei außergewöhnlich niedrigem, insbesondere fehlendem Luftverbrauch aus der Druckluftanlage eine unnötig große Druckluftmenge während der dann außergewöhnlich lange anhaltenden Leerlaufphase des Kompressors das Trocknungsmittel durchströmt, was einen unnötigen Energieverlust bedeudet.

Bei dem bekannten Lufttrockner kann ein im wesentlichen ringförmiger Eingangsraum vorgesehen sein, dessen Boden von einer mittels eines Verschlußgliedes des Auslaßventils verschließbaren Öffnung durchbrochen ist, welche die Mündung eines im wesentlichen abwärts führenden Auslaßkanals umgibt. Weiterhin kann je nach Ausführungsform des bekannten Lufttrockners die Trocknungspatrone oberhalb des Luftfilters angeordnet sein, wobei das Trocknungsmittel auf dem Luftfilter aufliegt und das Luftfilter sowie das Trocknungsmittel von einer Feder nach unten gedrückt werden. Auch ist es bekannt, das Trocknungsmittel in einer gegen die Kraft einer Feder anhebbar im Gehäuse gelagerten Trocknungspatrone unterzubringen. Hierbei befindet sich das ringförmige Luftfilter in einem zwischen dem Gehäuse und dem Außenmantel der Trocknungspatrone zum oberen Eingang der letzteren erstreckenden Luftkanal. Die Federbelastung des Trocknungsmittels soll dieses zerreibende Bewegungen beim plötzlichen Öffnen des Auslaßventils ausschließen.

Ein weiterer Lufttrockner ist mit der DE-B 1 947 550 bekannt geworden. Das Gehäuse dieses Lufttrockners beinhaltet dabei eine von unten nach oben druckluftdurchströmbare, durch Federkraft hochgedrückte Trocknungspatrone, an welcher sich in Strömungsrichtung ein Luftfilter anschließt. In einem angesetzten, oberen Gehäuseabschnitt befindet sich das von einer Düse überbrückte Rückschlagventil, von welchem eine Leitung zum Luftvorratsbehälter führt. In einem seitlich an das Gehäuse angesetzten Ventilgehäuseteil befindet sich ein über eine Rohrleitung mit dem Druckanschluß des Kompressors verbundener Eingangsraum, von welchem ein Luftführungskanal über ein federbelastetes Rückschlagventil in das Gehäuse führt. Außerdem ist der Eingangsraum über eine Rohrleitung und ein im an das Gehäuse angesetzten Gehäuseabschnitt untergebrachtes Überströmventil unter Umgehung der Trocknungspatrone, des Luftfilters und des Rückschlagventils mit dem Luftvorratsbehälter verbindbar. Ein gesondert angeordneter, vom Druck im Luftvorratsbehälter beaufschlagbarer Regler bzw. Druckwächter überwacht in nicht näher ersichtlicher Weise eine Entlastungsvorrichtung für den Kompressor und vermittels eines in einer Steuerleitung dem Ventilgehäuse zugeführten Hilfsdruckes eine Entwässerungsvorrichtung. Die Entwässerungsvorrichtung umfaßt eine vom tiefsten Punkt des Gehäuses ausgehende und zum Ventilgehäuse führende Rohrleitung, welche durch ein im Ventilgehäuse gleichachsig zum Rückschlagventil angeordnetes Ventil von einem ständig über eine Düse mit der Atmosphäre in Verbindung stehenden Raum abtrennbar ist.

Bei Erreichen eines Grenzdruckes im Luftvorratsbehälter beaufschlagt der vom Regler überwachte Hilfsdruck einen im Ventilgehäuse angeordneten Schaltkolben, welcher das Ventil öffnet und das Rückschlagventil hierbei geschlossen hält. Aus dem Luftvorratsbehälter vermag dann Druckluft durch die das Rückschlagventil überbrückende Düse und das Luftfilter sowie die Trocknungspatrone zum Boden des Gehäuses und weiter von dort durch die Rohrleitung zum Ventilgehäuse durch das geöffnete Ventil und durch die Düse zur Atmosphäre abzuströmen. Während dieses Strömungsvorganges regeneriert diese Druckluft das Trocknungsmittel und fördert am Boden des Gehäuses eventuell angesammeltes Kondensat durch die Rohrleitung und das Ventilgehäuse sowie durch die Düse zur Atmosphäre. Nachteilig ist hierbei, daß — ebenso wie beim Lufttrockner nach der erwähnten GB-A- 1 136 052 — dieser Strömungsvorgang anhält, bis der Druck im Luftvorratsbehälter eine untere Druckgrenze unterschreitet.

Der Regler schaltet dann zurück, im Ventilgehäuse schließt sich unter Federkraft das Ventil und das Rückschlagventil wird freigegeben und die Entlastungsvorrichtung des Kompressors wird stillgesetzt, so daß der Kompressor wieder Druckluft durch den Lufttrockner zum Luftvorratsbehälter fördert. Auch hierbei ist, wie zur GB-A- 1 136 057 bereits erläutert, nachteilig, daß die Zeitspanne, während welcher der Druck im Luftvorratsbehälter bis zum Unterschreiten der unteren Druckgrenze absinkt, entsprechend dem unterschiedlichen Luftverbrauch von an den Luftvorratsbehälter angeschlossenen Luftverbrauchern stark schwanken kann, sich somit sehr unterschiedliche Regenerierzeiten und dementsprechend unterschiedliche Regenerier-Druckluftmengen für das Trocknungsmittel ergeben. Da aus Sicherheitsgründen auch unter ungünstigen Bedingungen, bei nur sehr kurzen Regenerierzeiten, eine ausreichende Regenerierung des Trocknungsmittels erfolgen muß, ergibt sich im Durchschnitt ein unnötig hoher Druckluftverbrauch für die Regenerierung und somit ein die ganze Druckluftbeschaffungsanlage unnötig belastender, energieverschwendender Druckluftverbrauch. Weiterhin erfordert der Einbau des bekannten Lufttrockners in eine Druckluftbeschaffungsanlage eine Vielzahl von Leitungsverbindungen, die Installation und Wartung des Lufttrockners ist hierdurch aufwendig und teuer. Schließlich ist bei diesem bekannten Lufttrockner noch zu bemängeln, daß der Luftfilter der Trocknungspatrone nachgeschaltet ist, das Trocknungsmittel also völlig ungeschützt den vom Kompressor mit der Druckluft mitgeförderten Verunreinigungen, beispielsweise Öl, ausgesetzt ist.

Die FR-A- 881 809 zeigt einen Ölabscheider für Druckluftanlagen von Fahrzeugen, in dessen Gehäuse-Bodenabschnitt, unterhalb eines Filtergewebes, ein als Zweipunktregler ausgebildeter Druckwächter eingebaut ist, dessen Reglerkolben entgegen der Kraft einer Feder vom Druck in einem über ein Rückschlagventil abgesicherten Ausgangsanschluß entgegen der Kraft einer einstellbaren Feder Beaufschlagt ist. Der Reglerkolben ist gegen einen Ventilsitz andrückbar, der einen vom Druck im Ausgangsanchluß beaufschlagten Ringraum von einem mit dem Beaufchlagungsraum eines Schaltkolbens in Verbindung stehenden Kernraum abtrennt. Der Schaltkolben öffnet bei die Kraft einer Feder übersteigender Beaufschlagung ein Auslaßventil, das in den Boden eines Abscheide-Sammelraumes eingelassen ist und eine nach unten führende Verbindung zur Atmosphäre überwacht. Eine Lufttrocknungspatrone ist in dem bekannten Ölabscheider nicht vorhanden.

Aus der einen von den eingangs genannten Merkmalen abweichenden Lufttrockner zeigenden US-A- 3 796 025 ist es bekannt, unterhalb der Trocknungspatrone ein ringscheibenförmiges Luftfilter anzuordnen, dessen zentrische Aussparung von einem als Luftführungskanal dienenden Raum durchsetzt ist. Das Auslaßventil ist hierbei an tiefster Stelle des Lufttrockners mit waagrechter Achsrichtung angeordnet.

Mit der DE-A- 26 23 869 ist ein weiterer Lufttrockner mit einem Trocknungsmittelbehälter bekannt geworden, bei welchem der Luftfilter dem Trocknungsmittel in Druckluftströmungsrichtung gesehen vorgeschaltet ist. Das Gehäuse ist hierbei in drei durch in Druckluftströmungsrichtung öffnende Rückschlagventile miteinander verbundene Kammern unterteilt, von welchen die erste das Trocknungsmittel enthält, die zweite, ständig mit der ersten durch eine Düse verbundene Kammer die Regenerierluft enthält und die dritte Kammer den Luftvorratsbehälter darstellt. Bei diesem Lufttrockner steht somit immer ein bestimmtes Luftvolumen aus der zweiten Kammer zum Regenerieren des Trocknungsmittels zur Verfügung ; nachteilig ist bei dieser Anordnung jedoch, daß die zweite Kammer ein beachtliches Bauvolumen einnimmt, der Lufttrockner somit nur schwer in einem Fahrzeug unterzuubringen ist.

Weiterhin sind Lufttrocknungseinrichtungen bekannt, welche abweichend zu den eingangs erwähnten Merkmalen und den vorstehend beschriebenen Lufttrocknern zwei Trocknungspatronen aufweisen, von welchen wechselweise eine zur Lufttrocknung dient und die andere regeneriert wird. Mit der DE-A- 2 326 823 ist eine derartige Lufttrocknungseinrichtung in aufgelöster Bauweise bekannt geworden, bei welcher eine Druckwächter aufweisende, pneumatische Verzögerungs- bzw. Schaltvorrichtung zum zyklischen Vertauschen der jeweils die Druckluft trocknenden und der zu regenerierenden Trocknungspatrone vorgesehen ist. Mit der Zeitschrift « Fluid », Dezember 1979, ist ein weiterer Lufttrockner mit zwei Trocknungspatronen bekannt geworden, bei welchem die beiden Trocknungspatronen, ein von einem elektrischen, externen Zeitschalter ansteuerbares Magnetventil, von dem Magnetventil pneumatisch ansteuerbare Schaltventile zur zyklischen Umschaltung der beiden Trocknungspatronen, ein vom dem Luftvorratsbehälter zuzuführenden Ausgangsdruck beaufchlagter Dreipunktdruckregler und ein von diesem pneumatisch ansteuerbares, kolbengesteuertes Auslaßventil, welches sowohl als Entlastungsventil für den Kompressor wie auch als Entwässerungsventil dient, in einem Gehäuse zusammengefaßt sind. Zwar ist die pneumatische Installation dieses Lufttrockners relativ einfach, doch bedarf dieser ebenso wie die vorstehend erwähnte, installationsaufwendige Lufttrocknungseinrichtung eines großen Einbauraumes, weist einen viele Einzelteile und insbesondere Ventileinrichtungen umfassenden Aufbau auf und benötigt zudem eine gesonderte, elektrische Zeitschaltvorrichtung.

Es ist die Aufgabe der Erfindung, einen Lufttrockner der eingangs genannten Art, mit also nur einer Trocknungspatrone, derart auszubilden, daß er alle in einer Druckluftbeschaffungsanlage zwischen einem Kompressor und einem Luftvorratsbehälter erforderlichen Organe bienhaltet, in einfachster Weise in diese Druckluftbeschaffungsanlage installierbar ist, nur einen geringen Einbauraum erfordert, einen relativ einfachen inneren Aufbau aus einer nur geringen Anzahl von Einzelteilen besitzt, nur geringen Wartungsaufwand erfordert und keinen unnötigen Druckluftverbrauch bewirkt.

Diese Aufgabe wird nach der Erfindung durch die Kombination der Merkmale gelöst,

— daß, wie insgesamt an sich bekannt, der Druckwächter im Gehäuse angeordnet und als vom Druck im Ausgangsanschluß beaufschlagbarer Zweipunktregler ausgebildet ist sowie mittels eines Ventils die Druckbeaufschlagung eines das Auslaßventil steuernden Schaltkolbens überwacht, und

— daß eine pneumatische Verzögerungsvorrichtung vorgesehen ist, welche das Absperrventil nach dessen Öffnen für eine bestimmte Zeitspanne geöffnet hält und sodann schließt.

Der so ausgebildete Lufttrockner ist einfach in die vom Kompressor zum Luftvorratsbehälter führende Verbindungslzitung einordbar, das Luftfilter schützt das Trocknungsmittel vor Verunreinigungen in der vom Kompressor geförderten Druckluft, so daß das Trocknungsmittel über lange Betriebszeiten funktionsfähig bleibt, der als Zweipunktregler ausgebildete Druckwächter ermöglicht das Einstellen genauer Schaltpunkte, wodurch die das Trocknungsmittel durchsetzenden Luftmengen während der Aufpumpphase für den Luftvorratsbehälter bzw. während der Regenerierphase gut aufeinander abgestimmt werden können, und die zum Regenieren des Trocknungsmittels erforderliche Luftmenge ist durch die pneumatische Verzögerungsvorrichtung genau bemeßbar, es ist für sie kein besonderer Luftbehälter erforderlich.

Nach einem weiteren Merkmal der Erfindung kann dabei der Lufttrockner dadurch vorteilhaft ausgebildet werden, daß der Zweipunktregler einen Reglerkolben aufweist, der in Andrückrichtung an einen gehäusefesten, ersten Ventilsitz von der Kraft einer Feder beaufschlag ist, daß der Ventilsitz einen Kernraum von einem Ringraum trennt, deren Drücke den Reglerkolben entgegengesetzt zur Kraft der Feder belasten, und daß einer der Räume, Kernraum oder Ringraum, mit dem Ausgangsanschluß und der andere dieser Räume mit einem Beaufschlagungsraum für den Schaltkolben und über eine zweite Düse mit der Atmosphäre verbunden ist, daß dem Reglerkolben auf Seiten der Feder ein zweiter, gehäusefester Ventilsitz zugeordnet ist, und daß der eine der durch den zweiten Ventilsitz voneinander trennbaren Räume über eine gegebenenfalls eine dritte Düse aufweisende Verbindung mit dem Beaufschlagungsraum für den Schaltkolben und der anderer Raumüber die zweite Düse mit der Atmosphäre verbunden ist. Hierdurch ist es möglich, beim Schalten des Zweipunktreglers einen Wechsel der Größe der Beaufschlagungsflächen des Reglerkolbens zu erzielen, wodurch ein rasches, vollständiges Schalten des Zweipunktreglers sichergestellt wird.

Dabei kann es nach einem weiteren Merkmal der Erfindung zweckmäßig sein, wenn die justierbar ausgebildete Feder im über die zweite Düse mit der Atmosphäre verbundenen, an den zweiten Ventilsitz angrenzenden Raum angeordnet ist und wenn dem andererseits an den zweiten Ventilsitz angrenzenden, durch eine erste Kammer in seinem Volumen vergrößerten Raum .eine kleinere Beaufschlagungsfläche des Reglerkolbens zugeordnet ist als dem mit dem Beaufschlagungsraum des Schaltkolbens verbundenen Raum. Durch diese Ausbildung ist eine « verlustlos », d.h. ohne ständige, gedüste Entlüftung des Luftvorratsbehälters nach Erreichen dessen oberen Grenzdruckes arbeitende Druckregeleinrichtung möglich, wobei weiterhin durch die Abstimmung der beiden Beaufschlagungsflächen und die Volumenvergrößerung des Raumes das Schaltverhalten des Zweipunktreglers in beiden Richtungen weiter verbessert wird.

Nach weiteren Merkmalen der Erfindung kann zweckmäßig das Absperrventil ein mit einem Kolben verbundenes Schließglied aufweisen und der Kolben in Schließrichtung des Absperrventils von einer Feder, andererseits vom Druck in einem durch eine zweite Kammer in ihrem Volumen vergrößerten, zweiten Beaufschlagungsraum beaufschlagt sein, der über eine dritte Düse mit einem zwischen der Trocknungspatrone und dem Rückschlagventil befindlichen Raum verbunden ist. Dabei überbrückt zweckmäßig die dritte Düse den Kolben und der die den Kolben belastende Feder beinhaltende Raum wird über eine vierte Düse, die einen größeren Durchströmungsquerschnitt als die dritte Düse aufweist, mit dem zwischen Trocknungspatrone und Rückschlagventil befindlichen Raum verbunden. Der Hub des Kolbens in Kompressionsrichtung der ihn belastenden Feder wird dabei zweckmäßig durch einen justierbaren Anschlag begrenzt. Mit diesen Merkmalen ergibt sich eine äußerst zweckmäßige, raumsparend aufgebaute und genau arbeitende, pneumatische Verzögerungseinrichtung zum genauen Dosieren der Menge der das Trocknungsmittel zum Regererieren durchströmenden Luft.

Zum Vermeiden plötzlicher, das Trocknungsmittel möglicherweise zerreibender Entspannungsstöße beim Öffnen des Auslaßventils ist es nach der weiteren Erfindung zweckmäßig, wenn im Strömungsweg vom Luftfilter zur Trocknungspatrone eine in Druckluftströmungsrichtung öffnende Rückschlagklappe angeordnet ist, die von einer fünften Düse überbrückt ist.

Eine nach der Erfindung zweckmäßige, räumliche Ausbildung des Lufttrockners ist nach der weiteren Erfindung durch die Kombination der zum Teil an sich bekannten Merkmale erreichbar, daß das Auslaßventil an der tiefsten Stelle des zumindest in seinem oberen Abschnitt annähernd ringförmigen Eingangsraumes angeordnet ist, daß das wenigstens annähernd ringscheibenförmige Luftfilter den Eingangsraum nach oben begrenzt, daß sich die Trocknungspatrone zumindest im wesentlichen oberhalb des Luftfilters und gleichachsig zu diesem befindet, daß sich zwischen dem Gehäuse und dem Außenmantel der Trocknungspatrone ein vom Luftfilter zum oberen Eingang der Trocknungspatrone erstreckende Luftkanal befindet, daß an den unteren Ausgang der Trocknungspatrone ein eine zentrische Aussparung des Luftfilters durchsetzender Raum anschließt, an welchen unterhalb des Luftfilters mit waagrechter Achsrichtung das Rückschlagventil und der Ausgangsanschluß anschließen, und daß der Zweipunktregler und das Auslaßventil mit dem Schaltkolben mit waagrechten Achsrichtungen und das Absperrventil mit dem unter diesem bebefindlichen Kolben mit vertikaler Achsenrichtung etwa in der Ebene des Ausgangsanschlusses oder tiefer als dieser angeordnet sind.

Dabei ist es nach der weiteren Erfindung zweckmäßig, wenn die Rückschlagklappe als auf dem Luftfilter aufliegende, in einer Randzone eingespannte Ringmenbrane aus elastischem Werkstoff ausgebildet ist.

Um eine Druckluftversirgung auch bei verstopftem Luftfilter oder zugesetzter Trocknungspatrone sicherzustellen, ist es nach einem weiteren Merkmal der Erfindung zweckmäßig, wie an sich bekannt, das Luftfilter und die auf diesem aufsitzende Trockungspatrone gegen die Kraft einer Feder anhebbar im Gehäuse zu lagern, wobei im angehobenen Zustand eine umittelbare Verbindung vom Eingangsraum zum die Aussparung des Luftfilters durchsetzenden Raum freigegeben wird. Die vom Kompressor geförderte Druckluft kann dann unter Umgehung des Luftfilters und der Trocknungspatrone unmittelbar vom Eingangsraum durch das Rückschlagventil zum Ausgangsanschluß strömen.

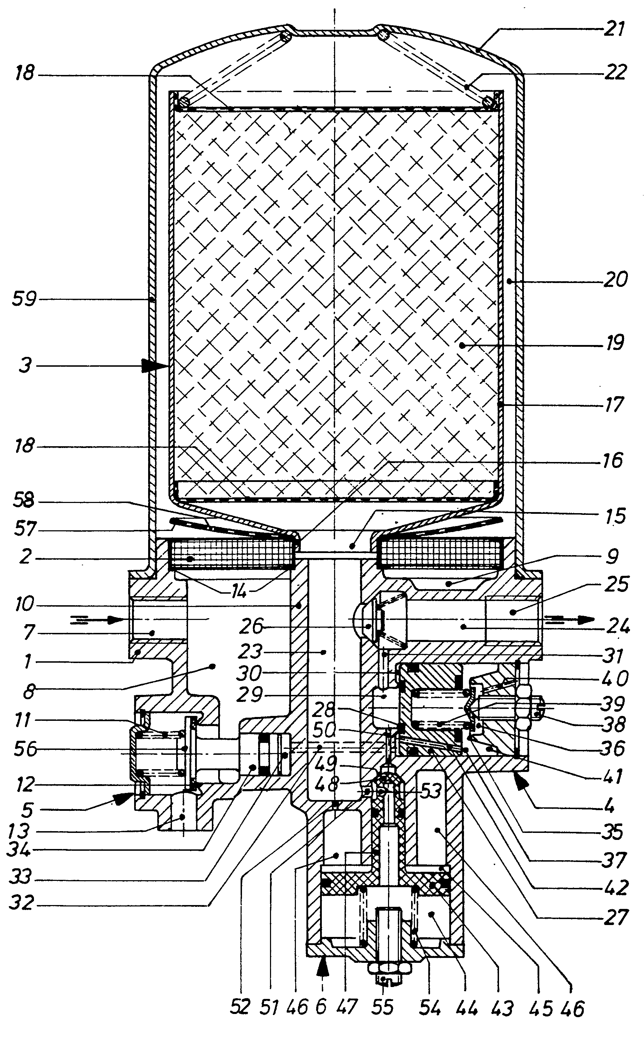

In der Zeichnung ist als Ausführungsbeispiel für die Erfindung ein Lufttrockner im Längsschnitt dargestellt.

Der Lufttrockner weist ein Gehäuse 1 auf, in welchem sich als Baugruppen ein Luftfilter 2, eine Trocknungspatrone 3, ein Zweipunktregler 4, eine kolbengesteuerte Auslaßventilvorrichtung 15 und eine pneumatische Verzögerungseinrichtung befinden.

Das Gehäuse 1 weist einen Eingangsanschluß 7 auf, an welchem über eine nicht dargestellte Rohrleitung der Druckanschluß eines ebenfalls nicht dargestellten Kompressor anzuschließen ist. Im Gehäuse 1 mündet der Eingangsanschluß 7 in einen Eingangsraum 8, der in seinem oberen Abschnitt 9 durch ein zentrisches, zylindrisches Gehäuseteil 10 kreisringartig ausgebildet ist. Nahe der Einmündung des Eingangsanschlusses 7 ist der Eingangsraum 8 nach unten verlängert; an seiner tiefsten Stelle befindet sich ein durch eine Feder 11 in Schließrichtung belastetes Auslaßventil 12, welches den Eingangsraum 8 von einem nach abwärts führenden und in die Atmosphäre mündenden Kanal 13 abtrennt. Der obere Abschnitt 9 des Eingangsraumes 8 ist nach oben durch das Luftfilter 2 begrenzt, welches ringscheibenartig ausgebildet ist und mit seiner radialinneren und radialäußeren Begrenzung auf Flanschflächen 14 des Gehäuses 1 bzw. des Gehäuseteiles 10 aufliegt. In die zentrische Aussparung 15 des Luftfilters 2 greift ein kurzer Rohransatz 16 des Gehäuses 17 der Trocknungspatrone 3 ein; ausgehend vom Rohransatz 16 erweitert sich das Gehäuse 17 nach oben und geht in einen langen, zylindrischen Abschnitt über, der nach unten und nach oben durch Lochscheiben 18 begrenzt ist und in welchem sich das Trocknungsmittel 19 befindet. Das Gehäuse 17 weist in seinem zylindrischen Abschnitt einen etwas geringeren Außendurchmesser auf, als es dem Innendurchmesser des Gehäuses 1 in diesem Bereich entspricht, so daß zwischen dem in diesem Bereich als Gehäusetopf 59 ausgebildeten Gehäuse 1 und dem Gehäuse 17 ein ringsförmiger Luftkanal 20 gebildet wird. Zwischen der oberen Lochscheibe 18 und dem die Trocknungspatrone 3 mit gewissem Abstand übergreifenden Deckelabschnitt 21 des Gehäusetopfes 59 ist eine Druckfeder 22 eingespannt, welche die Trocknungspatrone 3 nach unten gegen das Luftfilter 2 drückt. Im Gehäuseteil 10 befindet sich ein nach oben, zur Aussparung 15 hin offener Raum 23, von dessen unterem Ende ein nahezu waagrecht verlaufender Kanal 24 ausgeht, der in einem Ausgangsanschluß 25 endet. An den Ausgangsanschluß 25 ist über eine nicht dargestellte Rohrleitung ein ebenfalls nicht dargestellter Luftvorratsbehälter anzuschließen, welcher beispielsweise die für eine Druckluftbremsanlage eines Nutzfahrzeuges erforderliche Bremsdruckluft speichert. Im Kanal 24 ist ein in Strömungsrichtung vom Raum 23 zum Ausgangsanschluß 25 öffnendes Rückschlagventil 26 üblicher Bauart angeordnet.

Der nahe des Kanals 24 im Gehäuse 1 untergebrachte Zweipunktregler 4 weist einen ebenfalls mit waagrechter Achsrichtung angeordneten Reglerkolben 27 auf, welcher beiderseits Ventildichtringe trägt, welche mit gehäusefesten Ventilsitzen zusammenwirken können. Der näher dem Gehäusezentrum befindliche, erste Ventilsitz 28 trennt einen Kernraum 29 von einem Ringraum 30 ab. Der Kernraum 29 ist über einen Kanal 31 mit dem Kanal 24 kurz hinter dem Rückschlagventil 26 verbunden, und vom Ringraum 30 führt ein Kanal 32 zu einem ersten Beaufschlagungsraum 33, welcher von einem Schaltkolben 34 begrenz ist.

Der anderssetige, zweite Ventilsitz 35 trennt ebenfalls einen inneren Raum 36 von einem äußeren Raum 37 ab. Im inneren Raum 36 befindet sich eine vermittels einer Justierschraube 38 in ihrer Vorspannung justierbare Feder 39, welche den Reglerkolben 27 in Andrückrichtung an den ersten Ventilsitz 28 belastet. Weiterhin führt vom inneren Raum 36 eine als zweite Düse 40 ausgebildete Bohrung zur Atmosphäre. Vom in seinem Volumen durch eine ringsförmige erste Kammer 41 vergrößerten, äußeren Raum 37 führt eine als Düse 42 ausgebildete Bohrung durch den Reglerkolben 27 zum Ringraum 30 auf der anderen Seite des Reglerkolbens 27.

Die pneumatische Verzögerungseinrichtung 6 weist einen Kolben 43 auf, der mit vertikaler Achsrichtung angeordnet ist und einen unteren Raum 44 mit relativ großem Volumen von einem oberen Raum 45 abtrennt. Das Vollumen des Raumes 45 ist durch eine ringförmige zweite Kammer 46 vergrößert. Der Kolben 43 trägt einen nach oben ragenden, abgedichtet im Gehäuse 1 geführten, rohrartigen Ansatz 47, dessen oberes Endes durch eine als Schließglied 48 eines Absperrventils 49 ausgebildete Kappe verschlossen ist. Das Absperrventil 49 ist zwischen eine als Düse 50 ausgebildete, vom Kernraum 29 ausgehende Bohrung und eine Verbindungsbohrung 51 zum Raum 23 eingeordnet. Eine dritte Düse 52 verbindet die beiden Räume 23 und 45 bzw. 46 ständig miteinander. Der untere Raum 44 steht über den Innenraum des Ansatzes 47, dessen oberes Ende in eine vierte Düse 53 übergeht, ständig mit der Verbindungsbohrung 51 und damit dem Raum 23 in Verbindung. Die vierte Düse 53 weist einen größeren Durchströmungsquerschnitt als die dritte Düse 52 auf. Im Raum 44 befindet sich eine Feder 54, welche den Kolben 43 nach oben, in Bewegungsrichtung zum Raum 45, belastet. Eine mit dem Boden des Gehäuses 1 verschraubte, in den Raum 44 ragende Anschlagschraube 55 bildet einen justierbaren, den Abwärtshub des Kolbens 43 begrenzenden Anschlag.

Der Schaltkolben 34 trennt den Beaufschlagungsraum 33 vom unteren Abschnitt des Eingangsraumes 8 ab ; ein Stößel verbindet den Schaltkolben 34 derart mit dem Ventilteller 56 des Auslaßventils 12, daß bei Druikluftbeaufschlagung des Beaufschlagungsraumes 33 das Auslaßventil 12 entgegen der Kraft der Feder 11 geöffnet wird.

Während der normalen Druckluftförderungsphase der den Lufttrockner beinhaltenden Druckluftbeschaffungsanlage, bei noch nicht bis zum oberen Grenzdruck aufgeladenen Luftvorratsbehälter, fördert der Kompressor Druckluft durch den Eingangsanschluß 7 in den Eingangsraum 8 des hierbei die in der Zeichnung dargestellte Schaltstellung einnehmenden Lufttrockners. Aus dem durch das geschlossene Auslaßventil 12 vom Kanal 13 und damit der Atmosphäre abgeschlossenen Eingangsraum 8 strömt die Druckluft durch das auf den Flanschlächen 14 zumindest nahezu dicht aufliegende Luftfilter 2 und den Luftkanal 20 zur oberen Lochscheibe 18 der Trocknungspatrone 3. Beim Durchströmen des Luftfilters 2 werden aus der Druckluft mitgefördert Verunreinigungen, insbesondere auch Öl und Kondensattröpfchen, abgeschieden ; die abgeschiedene, gegebenenfalls verunreinigte Flüssigkeit tropft vom Luftfilter 2 ab und sammelt sich im unteren Abschnitt des Eingangsraumes 8 vor dem geschlossenen Auslaßventil 12. Die Druckluft durchströmt die obere Lochscheibe 18, das Trocknungsmittel 19 und die untere Lochscheibe 18 ; während des Durchströmens des Trocknungsmittels 19 gibt sie ihre restliche Feuchtigkeit an das Trocknungsmittel 19 ab. Die Druckluft gelangt sodann durch den Rohransatz 16 und die Aussparung 15 in den Raum 23, durchströmt das sich öffnende Rückschlagventil 26, den Kanal 24 und den Ausgangsanschluß 25 und gelangt über die nicht dargestellte Rohrleitung zum Luftvorratsbehälter. Der im Luftvorratsbehälter und damit im Kanal 24 sowie über dem Kanal 31 auch im Kernraum 29 herrschende Druck reicht dabei nicht aus, den Reglerkolben 27 entgegen der Kraft der Feder 39 gemäß der Zeichnung nach rechts vom ersten Ventilsitz 28 abzuheben. Der Reglerkolben 27 liegt daher dicht auf dem ersten Ventilsitz 28 auf und sperrt den Kernraum 29 von dem Ringraum 30 ab. Der Ringraum 30 und über den Kanal 32 der erste Beaufschlagungsraum 33 sind daher durch die Düse 42, den äußeren Raum 37 und den über den zweiten Ventilsitz 35 mit diesem verbundenen inneren Raum 36 sowie die zweite Düse 40 in die Atmosphäre entlüftet und weisen Atmosphärendruck auf. Die Feder 11 vermag daher das Auslaßventil 12 gegen die Atmosphärendruckbeaufschlagung des Schaltkolbens 34 durch den Beaufschlagungsraum 33 geschlossen zu halten.

Die Feder 54 hält den Kolben 43 in seiner dargestellten, oberen Endlage, in welcher das Absperrventil 49 geschlossen ist. Aus dem Raum 23 strömt Drucklufft durch die Verbindungsbohrung 51 und die vierte Düse 53 in den Raum 44 und durch die dritte Düse 52 in den Raum 45 und die zweite Kammer 46 ein und baut in diesen eine dem Druck im Luftvorratsbehälter entsprechende Druckhöhe auf. Es ist wesentlich, daß während dieser Aufladephase für den Luftvorratsbehälter keine Druckluft für irgendwelche Regenerationszwecke für ein Trocknungsmittel verbraucht wird und abströmt, sämtliche, vom Kompressor geförderte Druckluft vielmehr zum Aufladen des Luftvorratsbehälters dient. Hierdurch wird energiesparend ein rasches Aufladen des Luftvorratsbehälters ermöglicht.

Sobald der Druck im Luftvorratsbehälter einen oberen Grenzdruck erreicht, wird der Reglerkolben 27 vom auch im Kernraum 29 herrschenden, oberen Grenzdruck vom ersten Ventilsitz 28 entgegen der Kraft der Feder 39 abgehoben. Damit gelangt Druckluft auch in den Ringraum 30, der Reglerkolben 27 wird so auf einer zusätzlichen Beaufschlagungsfläche druckluftbeaufschlagt und bewegt sich somit rasch nach rechts bis zur dichten Anlage am zweiten Ventilsitz 35, wodurch der innere Raum 36 und der äußere Raum 37 voneinander getrennt werden. Aus dem Ringraum 30 strömt die Druckluft weiter durch den Kanal 32 zum Beaufschlagungsraum 33, der Schaltkolben 34 wird zusammen mit dem auf seiner linken Seite von Atmosphärendruck beaufschlagten Ventilteller 56 gemäß der Zeichnung nach links entgegen der Kraft der Feder 11 verschoben und das Auslaßventil 12 öffnet sich. Die im Eingangsraum 8 und den mit diesem verbundenen Räumen bis zum Rückschlagventil 26 befindliche Druckluft entspannt sich daher durch Abströmen durch das Auslaßventil 12 und den Kanal 13 zur Atmosphäre, wobei sie im unteren Abschnitt des Eingangsraumes 8 angesammeltes Kondensat mitreißt und zur Atmosphäre fördert. Das Rückschlagventil 26 schließt sich und verhindert ein unkontrolliertes Zurückströmen von Druck aus dem Luftvorratsbehälter. Im weiteren Verlauf fördert der gegebenenfalls weiterlaufende Kompressor Luft mit nahezu Atmosphärendruck durch den Eingangsanschluß 7, den Eingangsraum 8 und das geöffnete Auslaßventil 12 über große Querschnitte wieder zur Atmosphäre, der Kompressor läuft also höchstens im Leerlauf. Durch die Düse 42 strömt Druckluft in den äußeren Raum 37 sowie die erste Kammer 41 ein und läd diese auf den jeweils im Luftvorratsbehälter herrschenden Druck auf ; da infolge im Vergleich zum ersten Ventilsitz 28 größeren Durchmessers des zweiten Ventilsitzes 35 die erste Kammer 41 eine kleinere Fläche des Reglerkolbens 27 beaufschlagt als der Ringraum 30 und da der innere Raum 36 über die zweite Düse 40 mit Atmosphärendruck beaufschlagt bleibt, überwiegt auch bei Druckaufbau im äußeren Raum 37 die nach rechts wirkende Druckluftbeaufschlagung des Reglerkolbens 27 nach Verbindung des Kernraumes 29 mit dem Ringraum 30, der Druckaufbau im äußeren Raum 37 vermag also auch im Verein mit der sich durch die Verschiebung des Reglerkolbens 27 zusätzlich spannenden Feder 39 die Verschiebung des Reglerkolbens 27 nach rechts nicht zu hemmen und der Reglerkolben 27 verbleibt nach Erreichen des zweiten Ventilsitzes 35 sicher an diesem anliegend.

Nach dem vorstehend beschriebenen Entspannen auch der in Raum 23 befindlichen Druckluft strömt durch die vierte Düse 53 gedrosselt allmählich Druckluft aus dem Raum 44 durch die Verbindungsbohrung 51 zum Raum 23 nach, entspannt sich weitgehend, wodurch sie sehr trocken wird, und durchströmt sodann das Trocknungsmittel 19, wobei dieses Feuchtigkeit an die Luft abgibt und somit regeneriert wird. Sodann strömt die Druckluft durch den Luftkanal 20, das Luftfilter 2, aus welchem sie gegebenenfalls noch Verunreinigungen mitnimmt, den Eingangsraum 8 und das geöffnete Auslaßventil 12 zur Atmosphäre ab. Nach einer gewissen Zeitspanne, während welcher der im Raum 44 herrschende Druck um einen bestimmten Wert abgesunken ist, beginnt der Kolben 43 sich entgegen der Kraft der Feder 54 abzusenken, da der Druck im Raum 45 über die enge dritte Düse 52 der Druckabsenkung im Raum 45 über die enge dritte Düse 52 der Druckabsenkung im Raum 44 nur sehr langsam und zeitlich verzögert nachfolgen kann. Durch die Abwärtsbewegung des Kolbens 43 verringert sich das Volumen des Raumes 44, so daß der größte Teil der ursprünglich in diesem Raum 44 befindlichen Luft das Trocknungsmittel 19 zu dessen Regenerierung durchströmt, und zum anderen vergrößert sich das Volumen des Raumes 45, wodurch der im Raum 45 herrschende Druck abgesenkt wird, an der dritten Düse 52 somit immer nur eine geringe, der Spannung der Feder 54 entsprechende Druckdifferenz ansteht und vorerst nur wening Druckluft die Düse 52 durchströmt. Beim Anschlagen an der Anschlagschraube 55 wird die Abwärtsbewegung des Kolbens 43 beendet ; aus dem Raum 45 strömt weiterhin Druckluft durch die Düse 52 in den Raum 23 und das sich hierbei weiter regenerierende Trocknungsmittel 19 ab, bis die Druckdifferenz zwischen den Räumen 45 und 44 soweit abgebaut ist, daß die Feder 54 den Kolben 43 wieder anzuheben vermag. Die Hubbewegung des Kolbens 43 erfolgt jedoch ebenso wie die vorangehende Senkbewegung langsam, da das Volumen des Raumes 45 nun verkleinert wird und die hierdurch verdrängte Luft nur langsam durch die Düse 52 abströmen kann. Die die Düse 52 nun durchströmende Luft dient großenteils der Druckaufrechterhaltung im sich während dieser Funktionsphase vergrößernden Raum 44. Die Aufwärtsbewegung des Kolbens 43 hält an, bis nach einer bestimmten Zeitspanne das Absperrventil 49 wieder geschlossen wird. Während der Zeitspanne, in welcher das Absperrventil 49 wie vorstehend beschrieben geöffnet ist, strömt Druckluft vom Luftvorratsbehälter durch den Kanal 24 und die Düse 50 gedrosselt zur Verbindungsbohrung 51 und dem Raum 23, entspannt und trocknet sich hierbei, durchströmt das sich hierbei regenerierende Trocknungsmittel 19 und gelangt sodann durch den Eingangsraum 8 und das geöffnete Auslaßventil 12 zur Atmosphäre. Da das Absperrventil 49 nur für eine bestimmte Zeitspanne geöffnet ist, wird dem Luftvorratsbehälter nur eine bestimmte Luftmenge zum Regenerieren des Trocknungsmittels 9 entnommen. Es ist wesentlich, daß neben der dem Luftvorratsbehälter entnommenen Luftmenge auch die in der Verzögerungseinrichtung 6 anfänglich befindliche Druckluft größtenteils zur Regenerierung des Trocknungsmittels 19 herangezogen wird, also keinerlei unnötiger Druckluftverbrauch auftritt. Mittels der Anschlagschraube 55 kann der Hubraum des Kolbens 43 und damit die Öffnungszeit des Absperrventils 49 und hierdurch auch die dem Luftvorratsbehälter zur Regenerierung des Trocknungsmittels 19 entnommene Luftmenge derart eingestellt werden, daß das Trocknungsmittel 19 zwar ausreichend regeneriert wird, daß aber kein unnützer Luftverbrauch durch übermäßiges, zu langes Andauern der Regenerierphase erfolgt. Unabhängig von der Druckabsenkungsgeschwindigkeit im Luftvorratsbehälter erfolgt also stets nur eine eine bestimmte Zeitspanne anhaltende, ausreichende, aber keine übermäßige Regenerierung des Trocknungsmittels 19.

Sobald durch entsprechenden Luftverbrauch der aus dem Luftvorratsbehälter versorgten Druckluftanlage der Druck im Luftvorratsbehälter einen unteren Grenzwert unterschreitet, vermag die Feder 39 den Reglerkolben 27 vom zweiten Ventilsitz 35 abzuheben. Die aus dem äußeren, in seinem Volumen durch die Kammer 41 vergrößerten Raum 37 in den inneren Raum 36 einströmende Druckluft staut sich im Raum 36, aus welchem sie nur allmählich durch die zweite Düse 40 zur Atmosphäre abzuströmen vermag, der Reglerkolben 27 wird also nun zusätzlich auf seiner dem inneren Raum 36 zugewandten Fläche druckluftbeaufschlagt und bewegt sich infolgedessen rasch nach links bis zur Anlage am ersten Ventilsitz 28. Der Ringraum 30 wird daher vom Kernraum 29 abgetrennt und entlüftet sich zusammen mit dem Beaufschlagungsraum 33 durch die Düse 42, den äußeren Raum 37 und den inneren Raum 36 durch die zweite Düse 40 zur Atmosphäre. Infolge der Entlüftung des Beaufschlagungsraumes 33 vermag die Feder 11 den Ventilteller 56 und den Schaltkolben 34 bis zum Schließen des Auslaßventils 12 wieder nach rechts zu verschieben, wodurch der Eingangsraum 8 von der Atmosphäre abgetrennt wird. Der Kompressor beginnt nun wieder Druckluft zu fördern, welche durch den Eingangsraum 8 und in der bereits beschriebenen Weise durch das Luftfilter 2, unter ihrer Trocknung durch Trocknungsmittel 19 zum Raum 23 und weiter durch das sich öffnende Rückschlagventil 26 zum Luftvorratsbehälter strömt und diesen wieder auflädt. Zugleich wird über die vierte Düse 53 der Raum 44 und über die Düse 52 der Raum 45 mit der Kammer 46 wieder mit Druckluft gefüllt. Die Leerlaufphase des Kompressors ist also beendet und eine Aufladungsphase für den Luftvorratsbehälter wieder erreicht, wobei ein vollständiger Schaltzyklus, umfassend eine Aufladphase, eine Leerlaufphase mit Regenerierung des Trocknungsmittels 19 und eine weitere Leerlaufphase ohne Regeneriervorgang durchlaufen wurden.

Sollte sich das Luftfilter 2 zusetzen, so hebt während der Förderungsphase des Kompressors der sich im Eingangsraum 8 aufbauende Druck das Luftfilter 2 mitsamt der Trocknungspatrone 3 entgeden der Kraft der Feder 22 an, wobei der Eingangsraum 8 über die freie, innere Flanschfläche 14 in unmittelbare Verbindung zum Raum 23 gelangt.

Die vom Kompressor geförderte Druckluft gelangt also unmittelbar vom Eingangsraum 8 zum Raum 23 und über das Rückschlagventil 26 zum Ausgangsanschluß 25, sie wird zwar weder gefiltert noch getrocknet, doch fällt durch das Zusetzen des Luftfilters 2 nicht die Druckluftversorgung der Druckluftanlage aus.

Zur Schonung des Trocknungsmittels 19 kann es zweckmäßig sein, in der aus der Zeichnung ersichtlichen Weise zwischen dem Luftfilter 2 und der Trocknungspatrone 3 eine ringförmige Rückschlagklappe 57 anzuordnen. Die vorzugsweise aus elastischem Material bestehende, ringmembranartige Rückschlagklappe 57 ist an ihrem radialinneren Rand zwischen der Oberfläche des Luftfilters 2 und dem Gehäuse 17 der Trocknungspatrone 3 nahe dessen Rohransatzes 16 eingespannt. Einige fünfte Düsen 58 durchbrechen die Rückschlagklappe 57. Wahrend der Förderungsphase des Kompressors nimmt die Rückschlagklappe 57 die in der Zeichnung dargestellte Lage ein, in welcher sie mit Ausnahme ihres radialinneren Randes vom Luftfilter 2 nach oben angehoben ist, so daß die Druckluft durch das Luftfilter 2 ungehindert zum Luftkanal 20 strömen kann. Beim Übergang der Leerlaufphase wird durch Öffnen des Auslaßventils 12 die im Eingangsraum 8 befindliche Druckluft plötzlich entspannt, die Rückschlagklappe 57 legt sich auf die Oberfläche des Luftfilters 2 auf und deckt dieses ab, so daß die sich in den Räumen zwischen der Rückschlagklappe 57 und dem Rückschlagventil 26 befindliche Druckluft durch die fünfte Düsen 58 nur langsam Eingangsraum 8 und durch das Auslaßventil 12 zur Atmosphäre hin entspannen kann. Hierdurch wird eine plötzliche Entspannung der sich im Bereich des Trocknungsmittels 19 befindlichen Druckluft vermieden, das Trocknungsmittel 19 erfährt also keine Entspannungsstöße und wird vor Beschädigungen bewahrt.

In Abänderung des in der Zeichnung dargestellten und vorstehend beschriebenen Ausführungsbeispiels ist es möglich, zum Einsparen von Bauhöhe den Zweipunktregler 4 und die Auslaßventilvorrichtung 5 wenigstens annähernd in einer Ebene mit den einander gegenüberliegend angeordneten Eingangsanschluß 7 und Ausgangsanschluß 25 im Gehäuse 1 um die vertikale Mittelachse des Lufttrockners zur Zeichenebene verdreht unterzubringen.

Weiterhin ist es möglich, die Düse 42 durch Weglassen der Kolbendichtung des Reglerkolbens 27, also durch eine Undichtigkeit an der Führung des Reglerkolbens 27, zu ersetzen. Ebenso ist es möglich, die Kolbendichtung für den Kolben 43 sowie die Düse 52 wegzulassen und die beiden Räume 44 und 45 durch eine so bewirkte Undichtigkeit an der Führung des Kolbens 43 miteinander gedrosselt zu verbinden.

Weiterhin ist es möglich, die pneumatische Verzögerungsvorrichtung 6 dahingehend abzuwandeln, daß bei dichter Führung des Kolbens 43 die Düse 53 mit dem Innenraum des Ansatzes 47 entfällt, der Raum 44 vom Raum 23 abgetrennt und mit der Atmosphäre verbunden wird. Während der Förderphase des Kompressors strömt bei dieser Ausbildung durch die Düse 52 Druckluft in den Raum 45 ein und drückt den Kolben 43 entgegen der Kraft der Feder 54 bis zum Anliegen an der Anschlußschraube 55 abwärts. Während der Leerlaufphase des Kompressors, bei geöffnetem Auslaßventil 12, drückt die Feder 54 den Kolben 43 unter allmählicher Verdrängung der im Raum 45 befindlichen Luft durch die Düse 52 wieder nach oben, so daß sich mit bestimmter, zeitlicher Verzögerung zum Öffnen des Auslaßventils 12 das Absperrventil 49 schließt und den bis dahin anhaltenden Regeriervorgang für das Trocknungsmittel 19 unterbricht.

Falls die Druckregelung für die Druckluftanlage nicht wie vorstehend beschrieben verlustlos, sondern verlustbehaftet mit ständiger geduster Entlüftung des Luftvorratsbehälters während der Leerlaufphase des Kompressors arbeiten soll, können die Räume 36 und 37 durch Weglassen des zweiten Ventilsitzes 35 mit der ihm zugeordneten, am Reglerkolben 27 befindlichen Ventildichtung zu einem Raum zusammengefaßt werden. Bei gegen die Kraft der Feder 39 gemäß der Zeichnung nach rechts verschobenem Reglerkolben 27 ist dann der Luftvorratsbehälter über den Kanal 31, den Kernraum 29, den Ringraum 30, die Düse 42, die zusammengefaßten Räume 36 und 37 sowie die Düse 40 mit der Atmosphäre verbunden und entlüftet sich langsam in diese, so daß auch ohne anderweitigem Luftverbrauch aus der Druckluftanlage nach einiger Zeit der untere Grenzdruck erreicht wird und aus der Leerlaufphase in die Förderphase des Kompressors umgeschaltet wird.

## Ansprüche

1. Lufttrockner für von einem Kompressor aufladbare, einen Luftvorratsbehälter aufweisende Druckluftanlagen, insbesondere Druckluftbremsanlagen von Fahrzeugen, mit einem einen mit dem Kompressor zu verbindenden Eingangsanschluß (7) und einen mit dem Luftvorratsbehälter zu verbindenden Ausgangsanschluß (25) aufweisenden Gehäuse (1), in welchem in Serie von der zu trocknenden Druckluft durchströmbar ein Luftfilter (2), diesem nachgeschaltet eine mit regenerierbarem Trocknungsmittel (19) gefüllte Trocknungspatrone (3), ein dem Ausgangsanschluß (25) vorgeschaltetes, in Strömungsrichtung zu diesem offnendes, von einer Düse (50) überbrücktes Rückschlagventil (26), eine von einem Druckwächter (4) steuerbare, als Entwässerungsvorrichtung und Entlastungsvorrichtung für den Kompressor dienende, ein Kolbengesteuertes Auslaßventil (12) aufweisende Auslaßvorrichtung (5) und ein unmittelbar an den Eingangsanschluß (7), an das Luftfilter (2) und an das Auslaßventil (12) angrenzender Eingangsraum (8) sowie in Serie zur das Rückschlagventil (26) überbrückenden Düse (50) ein sich in Abhängigkeit vom Einsteuervorgang einer Arbeitsstellung öffnendes Absperrventil (49) vorgesehen sind, wobei der Druckwächter (4) vom Druck im Luftvorratsbehälter schaltbar ist und bei Erreichen eines oberen Grenzdruckes die Auslaßvorrichtung (5) in die die Druckluftförderung des Kompressors unterbrechende und ein Ausblasen von Kondensat bewirkende Arbeitsstellung, bei Unterschreiten eines unteren Grenzdruckes in eine die Druckluftförderung des Kompressors freigebende und das Ausblasen von Kondensat unterbrechende Ruhestellung schalter, wobei während der Arbeitsstellung Druckluft aus dem Luftvorratsbehälter durch die Düse (50), das sich hierbei regenerierende Trocknungsmittel (19) und durch die Auslaßvorrichtung (5) zur Atmosphäre abströmt, gekennzeichnet durch die Kombination der Merkmale,

— daß, wie insgesamt an sich bekannt, der Druckwächter im Gehäuse (1) angeordnet und als vom Druck im Ausgangsanschluß (25) beaufschlagbarer Zweipunktregler (4) ausgebildet ist sowie mittels eines Ventils die Druckbeaufschlagung eines das Auslaßventil (12) steuernden Schaltkolbens (34) überwacht, und

— daß eine pneumatische Verzögerungseinrichtung (6) vorgesehen ist, welche das Absperrventil (49) nach dessen Öffnen für eine bestimmte Zeitspanne geöffnet hält und sodann schliebt.

2. Lufttrockner nach Anspruch 1, dadurch gekennzeichnet daß der Zweipunktregler (4) einen Reglerkolben (27) aufweist, der in Andrückrichtung an einen gehäusefesten, ersten Ventilsitz (28) von der Kraft einer Feder (39) beaufschlagt ist, daß der Ventilsitz (28) einen Kernraum (29) von einem Ringraum (30) trennt, deren Drücke den Reglerkolben (27) entgegengesetzt zur Kraft der Feder (39) belasten, und daß einer der Räume, Kernraum (29) oder Ringraum (30), mit dem Ausgangsanschluß (25) und der andere dieser Räume mit einem Beaufschlagungsraum (33) für den Schaltkolben (34) und über eine zweite Düse (40) mit der Atmosphäre verbunden ist, daß dem Reglerkolben (27) auf Seiten der Feder (39) ein zweiter gehäusefester Ventilsitz (35) zugeordnet ist, und daß der eine (37) der durch den zweiten Ventilsitz (35) voneinander trennbaren Räume (36, 37) über eine gegebenenfalls eine Düse (42) aufweisende Verbindung mit dem Beaufschlagungsraum (33) für den Schaltkolben (34) und der andere Raum (36) über die zweite Düse (40) mit der Atmosphäre verbunden ist.

3. Lufttrockner nach Anspruch 2, dadurch gekennzeichnet, daß die justierbar ausgebildete Feder (39) im über die zweite Düse (40) mit der Atmosphäre verbundenen, an den zweiten Ventilsitz (35) angrenzenden Raum (36) angeordnet ist, und daß dem andererseits an den zweiten Ventilsitz (35) angrenzenden, durch eine erste Kammer (41) in seinem Volumen vergrößerten Raum (37) eine kleinere Beaufschlagungsfläche des Reglerkolbens (27) zugeordnet ist als dem mit dem Beaufschlagungsraum (33) des Schaltkolbens (34) verbundenen Raum (30).

4. Lufttrockner nach einem oder mehreren der vorstehenden Ansprüche, dadurch gekennzeichnet, daß das Absperrventil (49) ein mit einem Kolben (43) verbundenes Schließglied (48) aufweist und daß der Kolben (43) in Schließrichtung des Absperrventils (49) von einer Feder (54), andererseits vom Druck in einem durch eine zweite Kammer (46) in seinem Volumen vergrößerten Raum (45) beaufschlagt ist, der über eine dritte Düse (52) mit einem zwischen der Trocknungspatrone (3) und dem Rückschlagventil (26) befindlichen Raum verbunden (23) ist.

5. Lufttrockner nach Anspruch 4, dadurch gekennzeichnet, daß die dritte Düse (52) den Kolben (43) überbrückt und daß der die den Kolben (43) belastende Feder (54) behinhaltende Raum (44) über eine vierte Düse (53), die einen größeren Durchströmungsquerschnitt als die dritte Düse (52) aufweist, mit dem zwischen Trocknungspatrone (3) und Rückschlagventil (26) befindlichen Raum (23) verbunden ist.

6. Lufttrockner nach Anspruch 4 oder 5, dadurch gekennzeichnet, daß der Hub des Kolbens (43) in Kompressionsrichtung der ihn belastenden Feder (54) durch einen justierbaren Anschlag (55) begrenzt ist.

7. Lufttrockner nach einem oder mehreren der vorstehenden Ansprüche, dadurch gekennzeichnet, daß im Strömungsweg vom Luftfilter (2) zur Trocknungspatrone (3) eine in Druckluftströmungsrichtunf öffnende Rückschlagklappe (57) angeordnet ist, die von einer fünften Düse (58) überbrückt ist.

8. Lufttrockner nach den Ansprüchen 1 bis 6, gekennzeichnet durch die Kombination der zum Teil ab sich bekannten Merkmale, daß das Auslaßventil (12) an der tiefsten Stelle des zumindest in seinem oberen Abschnitt (9) annähernd ringförmigen Eingangsraumes (8) angeordnet ist, daß das wenigstens annähernd ringscheibenförmige Luftfilter (2) den Eingangsraum (8) nach oben begrenzt, daß sich die Trocknungspatrone (3) zumindest im wesentlichen oberhalb des Luftfilters (2) und gleichachsig zu diesem befindet, daß sich zwischen dem Gehäuse (1) und dem Aussenmantel der Trocknungspatrone (3) ein vom Luftfilter (2) zum oberen Eingang der Trockungspatrone (3) erstreckende Luftkanal (20) befindet, daß an den unteren Ausgang der Trocknungspatrone (3) ein eine zentrische Aussparung (15) des Luftfilters (2) durchsetzender Raum anschließt (23), an welchen unterhalb des Luftfilters (2) mit waagrechter Achsrichtung das Rückschlagventil (26) und der Ausgangsanschluß (25) anschließen, und daß der Zweipunktregler (4) und das Auslaßventil (12) mit dem Schaltkolben (34) mit waagrechten Achsenrichtungen und das Absperrventil (49) mit dem unter diesem befindlichen Kolben (43) mit ebenfalls waagrechter oder vertikaler Achsenrichtung etwa in der Ebene des Ausgangsanschlusses (25) oder tiefer als dieser angeordnet sind.

9. Lufttrockner nach Anspruch 1 bis 8, dadurch gekennzeichnet, daß die Rückschlagklappe (57) als auf dem Luftfilter (2) aufliegende, in einer Randzone eingespannte Ringmembare aus elastischem Werkstoff ausgebildet ist.

10. Lufttrockner nach Anspruch 8 oder 9, dadurch gekennzeichnet, daß, wie an sich bekannt, das Luftfilter (2) und die auf diesem aufsitzende Trocknungspatrone (3) gegen die Kraft einer Feder (22) anhebbar im Gehäuse (1) gelagert sind, wobei im angehobenen Zustand eine unmittelbare Verbindung vom Eingangsraum (8) zum die Aussparung (15) des Luftfilters (2) durchsetzenden Raum (23) freigegeben ist.

**Claims**

1. An air drier for compressed air systems having an air reservoir and being chargeable by a compressor, in particular the pneumatic brake systems of vehicles, comprising a housing (1) with an inlet connection (7) to be connected to the compressor on the one hand and an outlet connection (25) to be connected to the air reservoir on the other, in which housing provision is made for an air filter (2), which is mounted in series and through which the compressed air to be dried can pass, the said air filter being followed by a drying cartridge (3) filled with a replenishable drying agent (19), a back check valve (26), which precedes the outlet connection (25), opens in the direction of flow of the said connection and is bridged by a nozzle (50), an outlet device (5) which can be controlled by a pressure governor (4), serves as both a drainage and relief device for the compressor and comprises a piston-controlled exhaust valve (12), and further an inlet space (8) directly adjacent to the inlet connection (7), the air filter (2) and the exhaust valve (12) and, in series with the nozzle (50) bridging the back pressure valve (26), a shut-off valve (49) which opens in accordance with the control process associated with an operating position, whereby the said pressure governor (4) can be switched by the pressure in the air reservoir and, if an upper pressure limit is attained, itself switches the outlet device (5) to the operating position which interrupts the supply of compressed air by the compressor and causes the expulsion of the condensation product or, if a lower pressure limit is not attained, switches it to a rest position which permits the supply of compressed air from the compressor and interrupts expulsion of the condensation product, compressed air being vented from the air reservoir to the atmosphere, when the operating position is in effect, by way of the nozzle (50), the drying agent (19), which regenerates itself in the process, and the outlet device (5), possessing the combination of characteristic features :

— that, as is already know, the pressure governor is located in the housing (1) in the form of a two-position controller (4) upon which the pressure in the outlet connection (25) can act, an supervises, by means of a valve, the application of pressure to a switching piston (34) which controls the exhaust valve (12), and

— that provision is made for a pneumatic retarding device (6) which holds the shut-off valve (49) open for a certain period of time once the latter has opened, and subsequently closes the said valve.

2. An air drier as claimed in Claim 1, possessing the characteristic feature that the two-position controller (4) has a regulating piston (27) which acts in the direction of the pressure, by the force of a spring (39), on a first valve seat (28) permanently attached to the housing, that the valve seat (28) separates a core space (29) from a ring space (30), the pressures of which act on the regulating piston (27) against the force of the spring (39), that one of the aforementioned spaces, namely the core space (29) or the ring space (30) is connected to the outlet connection (25) and the other of the aforementioned spaces is connected to an application space (33) for the switching piston (34) and also to the external atmosphere by way of a second nozzle (40), that the regulating piston (27) is assigned, on the side of the spring (39), a second valve seat (35) permanently attached to the housing, and that one (37) of the spaces (36, 37) which can be separated from each other by the second valve seat (35) is connected by way of a connection, possibly having a nozzle (42), to the application space (33) for the switching piston (34) and the other space (36) is connected to the atmosphere by way of the second nozzle (40).

3. An air drier as claimed in Claim 2, possessing the characteristic feature that the adjustable spring (39) is situated in the space (36) which is connected to the atmosphere by way of the second nozzle (40) and adjacent to the second valve seat (35), and that the space (37) which for its parts adjoins the second valve seat (35) and the volume of which is enlarged by a first chamber (41) is assigned a smaller regulating piston (27) application surface compared with the space (30) connected to the application space (33) of the switching piston (34).

4. An air drier as claimed in one or more of the above Claims, possessing the characteristic feature that the shut-off valve (49) has a closing device (48) linked to a piston (43) and that the said piston (43) is acted upon in the direction of closure of the shut-off valve (49) by a spring (54) on the one hand and on the other by the pressure in a space (45), the volume of which is enlarged by means of a second chamber (46), this said space being connected to a space (23) between the drying cartridge (3) and the back check valve (26) by way of a third nozzle (52).

5. An air direr as claimed in Claim 4, possessing the characteristic feature that the third nozzle (52) bridges the piston (43) and that the space (44) containing the spring (54) which acts on the piston (43) is connected to the space (23) between the drying cartridge (3) and the back check valve (26) by way of a fourth nozzle (53) having a larger cross-section for the passage of air than the third nozzle (52).

6. An air drier as claimed in Claim 4 or 5, possessing the characteristic feature that the stroke of the piston (43) is limited by an adjustable stop (55) in the direction of compression of the spring (54) acting on it.

7. An air drier as claimed in one or more of the above Claims, possessing the characteristic feature that a back pressure flap (57) which opens in the direction of the compressed air and is bridged by a fifth nozzle (58) is located in the flow path between the air filter (2) and the drying cartridge (3).

8. An air drier as claimed in Claims 1 to 6, possessing the combination of features, some of which are already known, that the exhaust valve (12) is located at the lowest point of the inlet space (8), which is approximately ring-shaped, at least in its upper section (9), that the air filter (2), which is at least approximately in the shape of an annular disc, constitutes the upper limit for the inlet space (8), that the drying cartridge (3) is situated at least for the greater part above the air filter (2) and on the same axis, that between the housing (1) and the outer cover of the drying cartridge (3) there is an air duct (20) leading from the air filter (2) to the upper inlet of the drying cartridge (3), that a space (23) occupying a central opening (15) in the air filter (2) adjoins the lower inlet of the drying cartridge (3), that the back check valve (26) and the outlet connection (25) adjoin the aforementioned space beneath the air filter (2) with a horizontal axial direction, and that the two-position controller (4) and the exhaust valve (12) with the switching piston (34) with horizontal axial directions and the shut-off valve (49) with the piston (43) beneath it, likewise with horizontal or vertical axial direction, are situated approximately on the same level as or slightly lower than the outlet connection (25).

9. An air drier as claimed in Claims 1 to 8, possessing the characteristic feature that the back pressure flap (57) is in the form of an annular diaphragm of elastic material which is connected to the air filter (2) and tensioned in a marginal area.

10. An air drier as claimed in Claim 8 or 9, possessing the characteristic feature that, as is already know, the air filter (2) and the drying cartridge (3) which is located above it are mounted in the housing (1) in such a manner that they can be raised against the force of a spring (22), so that in the raised condition a direct connection is established between the inlet space (8) and the space (23) occupying the opening (15) in the air filter (2).

**Revendications**

1. Assécheur d'air pour des installations d'air comprimé susceptibles d'être chargées par un compresseur et comportant un réservoir d'air de réserve, plus particulièrement pour des installations de freins à air comprimé pour des véhicules, comprenant un boîtier (1) pourvu d'un raccord d'admission (7) à relier au compresseur et un raccord d'évacuation (25) à relier au réservoir d'air de réserve, et dans lequel sont prévus, pour être traversés en série par l'air à assécher un filtre à air (2), en aval de ce dernier, une cartouche de séchage (3) remplie d'une substance de séchage (19) susceptible d'être régénérée, une soupape de retenue (26) montée en amont du raccord d'évacuation (25), s'ouvrant vers ce dernier, dans le sens de l'écoulement et contrôlée par une tuyère (50), un dispositif d'évacuation (5) susceptible d'être commandé par un monostat, servant de dispositif de purge et de délestage pour le compresseur et présentant une soupape d'évacuation (12) commandée par un piston et une chambre d'entrée (8) avoisinant directement le raccord d'admission (7), le filtre à air (2) et la soupape d'évacuation (12), ainsi, qu'en série avec la tuyère (50) en parallèle sur la soupape de retenue (26), une soupape d'arrêt (49) qui s'ouvre en fonction de l'opération de réglage d'une position de travail, le manostat (4) étant susceptible d'être commandé par la pression qui règne dans le réservoir de réserve et commutant, lorsqu'est atteinte une pression-limite supérieure, le dispositif d'évacuation (5) dans une position de travail qui interrompt le refoulement de l'air comprimé par le compresseur et la purge du condensat, et lorsque la pression passe en-dessous d'une valeur-limite inférieure, une position de repos autorisant le compresseur à débiter de l'air comprimé et interrompant la purge du condensat, alors que dans la position de travail de l'air comprimé provenant du réservoir d'air de réserve s'échappe dans l'atmosphère en passant par la tuyère (50), par la substance de séchage (19) qui subit de ce fait une régénération et par le dispositif d'évacuation (5), caractérisé par la combinaison des moyens remarquables qui consistent,

— en ce que, d'une manière généralement connue en soi, le manostat est disposé dans le boîtier (1) et est réalisé sous la forme d'un régulateur à deux positions (4) susceptible d'être chargé par la pression qui règne dans le raccord d'évacuation (25) et surveille, à l'aide d'une soupape, la charge en pression d'un piston de commutation qui commande la soupape d'évacuation (12), et

— en ce qu'il est prévu un dispositif pneumatique à retard (6) qui maintient ouverte, pour une durée déterminée, la soupape d'arrêt (49) après son ouverture et la ferme ensuite.

2. Assécheur d'air selon la revendication 1, caractérisé par le fait que le régulateur à deux positions (4) comporte un piston de réglage (27) qui est chargé par la force d'un ressort (39) dans la direction d'application contre un premier siège de soupape (28) solidaire du boîtier, que le siège de soupape (28) sépare une chambre centrale (29) d'une chambre annulaire (30) dont les pressions chargent le piston de réglage (27) à l'encontre de la force du ressort (39), et que l'une des chambres, la chambre centrale (29) ou la chambre annulaire (30) est reliée au raccord d'évacuation (25) et l'autre de ces chambres est reliée à une chambre de charge (33) pour le piston de commutation (34) et, par l'intermédiaire d'une seconde tuyère (40), avec l'atmosphère, qu'au piston de réglage (27) est associé, du côté du ressort (39), un second siège de soupage (35) solidaire du boîtier, et que l'une (37) des deux chambres (36, 37) qui sont susceptibles d'être séparées l'une de l'autre par le second siège de soupape (35) est reliée, par l'intermédiaire d'une liaison pouvant éventuellement comporter une tuyère (42), à la chambre de charge (33) pour le piston de commutation (34), alors que l'autre chambre (36) est reliée à l'atmosphère par l'intermédiaire de la seconde tuyère (40).

3. Assécheur d'air selon la revendication 2, caractérisé par le fait que le ressort (39), qui est réalisé de façon à être réglable, est disposé dans la chambre (36) qui avoisine le second siège de soupape (35) qui est relié à l'atmosphère par l'intermédiaire de la seconde tuyère (40) et qu'à la chambre (37) qui avoisine par ailleurs le second siège de soupape (35) et dont le volume est augmenté par la première chambre (41), est associée une surface de charge du piston de réglage (27) qui est plus petite que celle qui est associée à la chambre (30) qui est reliée à la chambre de charge (33) du piston de commutation (34).

4. Assécheur d'air selon une ou plusieurs des revendications précédentes, caractérisé par le fait que la soupape d'arrêt (49) comporte un organe de fermeture (48) relié à un piston (43), et que le piston (43), est chargé en direction de la fermeture de la soupape d'arrêt (40), par un ressort (54) et d'autre part par la pression qui règne dans une chambre (45) dont le volume est augmenté par une seconde chambre (46), ladite chambre (45) étant reliée, par l'intermédiaire d'une troisième tuyère (52), à une chambre (23) qui se situe entre la cartouche de séchage (3) et la soupape de retenue (26).

5. Assécheur d'air selon la revendication 4, caractérisé par le fait que la troisième tuyère (52) ponte le piston (43) et que la chambre (44) qui contient le ressort (54) qui charge le piston (43), est reliée, par l'intermédiaire d'une quatrième tuyère (53) qui possède une section transversale de passage qui est plus grande que celle de la troisième tuyère (52), à la chambre (23) qui est située entre la cartouche de séchage (3) et la soupape de retenue (26).

6. Assécheur d'air selon la revendication 4 ou 5, caractérisé par le fait que la course du piston, dans la direction de la compression du ressort (54) qui le charge, est limitée par une butée réglable (55).

7. Assécheur d'air selon une ou plusieurs des revendications précédentes, caractérisé par le fait que dans la voie de l'écoulement du filtre à air (2) vers la cartouche de séchage (3) est disposé un clapet de retenue (57) qui s'ouvre dans la direction de l'écoulement de l'air comprimé, clapet de retenue qui est ponté par une cinquième tuyère (55).

8. Assécheur d'air selon les revendications 1 à 6, caractérisé par la combinaison des moyens, connus en partie en eux-mêmes, remarquables en ce que la soupape d'évacuation (12) est disposée au point le plus bas de la chambre d'entrée (8) dont la section supérieure (9) est à peu près de forme annulaire, en ce que le filtre à air (2) qui a au moins approximativement la forme d'un anneau, limite la chambre d'entrée (8) vers le haut, en ce que la cartouche de séchage (3) se situe, au moins pour l'essentiel, au-dessus du filtre à air (2) et coaxialement à ce dernier, en ce qu'entre le boîtier (1) et la paroi latérale extérieure de la cartouche de séchage (3) se trouve un canal (20) qui s'étend du filtre à air (2) vers l'entrée supérieure de la cartouche de séchage (3), en ce qu'à la sortie inférieure de la cartouche de séchage (3) se raccorde une chambre qui s'étend à travers une ouverture centrale (15) du filtre à air (2), chambre à laquelle se raccordent, en dessous du filtre à air (2) et avec une direction axiale horizontale, la soupape de retenue (26) et le raccord d'évacuation (25), et en ce que le régulateur à deux positions (4) et la soupape d'évacuation (12), avec le piston de commutation (34) à direction axiale horizontale, et la soupape d'arrêt (49), avec le piston (43) qui se trouve sous cette dernière et à direction axiale également horizontale ou verticale, sont disposés dans le plan du raccord d'évacuation (5) ou à un niveau plus bas que ce dernier.

9. Assécheur d'air selon la revendication 1 à 8, caractérisé par le fait que le clapet anti-retour (57) est réalisé sous la forme d'une membrane annulaire en un matériau élastique, sertie dans sa zone périphérique et reposant sur le filtre à air (2).

10. Assécheur d'air selon la revendication 8 ou 9, caractérisé par le fait, comme cela est connu en soi, que le filtre à air (2) et la cartouche de séchage (3) qui repose sur ce dernier, sont montés dans le boîtier (1) de manière à pouvoir être soulevés, contre la force d'un ressort (22), la réalisation étant telle qu'à l'état soulevé, se trouve dégagée une liaison entre la chambre d'entrée (8) et une chambre (23) traversant l'ouverture (15) du filtre à air.

0 036 569